# EUROPÄISCHE PATENTANMELDUNG

(11) **EP 1 721 654 A1**
(43) Veröffentlichungstag der Anmeldung: **15.11.2006**
(21) Anmeldenummer: 06008484.5
(22) Anmeldetag: 25.04.2006
(51) Int. Cl.: B01D 53/26

(54) **Kälte-Trockner für ein Gas**

(30) Priorität: 04.05.2005 DE 202005007366 U; 04.06.2005 DE 202005008751 U
(71) Anmelder: SPX Dehydration and Process Filtration GmbH, 47445 Moers (DE)
(72) Erfinder: Ramacher, Joachim, 47445 Moers (DE); Sundermann, Stefan, 48683 Ahaus (DE)
(74) Vertreter: Schoenen, Norbert

(57) **Zusammenfassung**

Der Kälte-Trockner für ein Gas, insbesondere für Druckluft, mit einem Wärmetauscher, ist mit einem Kältemittel betreibbar und weist einen Austritt (8) für das Gas und einen Temperatursensor (1) zur Messung der Gastemperatur am Austritt auf, wobei ein erster Wärmeleiter (2) den Temperatursensor (1) mit dem Kältemittel verbindet. Der erste Wärmeleiter (2) ist außerhalb des Wärmetauschers (3) angeordnet. Der Wärmetauscher ist insbesondere ein Plattenwärmetauscher (3).

## Beschreibung

Die Erfindung betrifft einen Kälte-Trockner entsprechend dem Oberbegriff des Anspruchs 1. Der Wärmetauscher nutzt ein Kältemittel zum Wärmetransport.

Ein derartiger Kälte-Trockner ist aus der US 6,711,906 B2 vom 30. März 2004 (HANKISON International, USA) bekannt.

Kälte-Trockner für Druckluft werden verwendet, um Feuchtigkeit und Wasserdampf aus der Druckluft zu entfernen. Hierzu wird die Druckluft im Gegenstromverfahren gekühlt. Nach Durchlaufen einer Vorkühlstufe, in welcher die eintretende warme Druckluft von der austretenden bereits entfeuchteten kalten Druckluft im Gegenstrom vorgekühlt wird, beginnt die in der Druckluft enthaltende Feuchtigkeit zu kondensieren. Die vorgekühlte Druckluft wird durch einen weiteren Wärmetauscher geleitet, welcher im Gegenstrom mit einem Kältemedium betrieben wird, welches in diesem Wärmetauscher verdampft und dabei Wärme von der Druckluft aufnimmt und diese kühlt. Der gekühlte Druckluftstrom strömt dann durch einen Flüssigkeitsabscheider, wo das Kondensat abgeschieden und aus dem System entfernt wird. Die gekühlte und getrocknete Druckluft wird dann zurückgeführt durch den Vorkühler, um die neu eintretende warme Druckluft vorzukühlen und selber Wärme von der noch nicht behandelten Druckluft aufzunehmen.

Derartige Kältetrockner für Druckluft oder andere Gase arbeiten in der Regel nicht mit einem zeitlich konstanten Durchsatz an Druckluft, sondern je nach der angeforderten Menge an getrockneter Druckluft unter wechselnden Lastbedingungen von Volllast über Teillast und sehr niedrigen Druckluftmengen bis hin zur Nulllast. Um unter solchen wechselnden Lastbedingungen möglichst wenig Energie zu verbrauchen, hat die HANKISON International, USA einen Kälte-Trockner entwickelt, der besonders energieeffizient arbeitet. Der Trockner wird ausführlich in der Zeitschrift "Drucklufttechnik, Zeitschrift für die Anwendung von Druckluft in der Industrie", Heft Mai/Juni 2002 unter dem Titel "Vorsprung durch Innovation bei Kälte-Drucklufttrocknern" von Timothy J. Fox im Einzelnen beschrieben. Zur Ergänzung der Offenbarung und zur Vermeidung von Wiederholungen wird ausdrücklich auf diesen Artikel Bezug genommen.

Um die dort beschriebene Energieeinsparung und auch unter wechselnden Lastbedingungen immer eine möglichst niedrige, aber konstante Drucklufttemperatur nach der Kühlung zu erreichen, wobei die Temperatur aber nicht unter den Gefrierpunkt des Kondensats (0 °C) absinken soll, ist eine genaue Messung und Regelung der Drucklufttemperatur bzw. der Kühlmitteltemperatur erforderlich. Hierzu ist es bekannt, die Temperatur der aus dem Wärmetauscher austretenden Druckluft zu messen und mit dieser Messgröße die Kühlmitteltemperatur zu regeln. Bei sehr niedrigen Lastbedingungen oder bei Nulllast, wenn nur wenig oder keine Druckluft durch den Wärmetauscher strömt, ist es sehr schwierig oder gar unmöglich, die exakte aktuelle Temperatur der Druckluft zu messen. Die Temperatur am Temperatursensor könnte bei sehr niedrigen Durchflussraten der Druckluft oder bei Nulllast in der stagnierenden Druckluft ansteigen, so dass die Regeleinheit die Kühlmitteltemperatur so weit absenkt, bis die Feuchtigkeit in unerwünschter Weise ausfriert und die ausgefrorenen Eispartikel die Anlage verstopfen oder sogar den Wärmetauscher zerstören.

Diese Situation tritt z. B. auf, wenn in nahe liegender Weise der Temperatursensor direkt in den Gasstrom, also den Druckluftstrom gesetzt wird.

In dem oben genannten US-Patent wird daher vorgeschlagen, zur Lösung dieses Problems eine Mischtemperatur zu erfassen, die sich aus der Drucklufttemperatur, also der Gastemperatur, und der Kühlmitteltemperatur zusammensetzt. Dabei wird die Temperatur des Gases bzw. der Druckluft unmittelbar am Ort des Druckluftaustritts aus dem Wärmetauscher und die Kühlmitteltemperatur über einem Wärmeleiter gemessen, welcher den Temperatursensor thermisch mit dem Kältemittel verbindet.

Bei Volllast wird dann die aktuelle Gastemperatur gemessen, welche die über den Wärmeleiter herangeführte Kältemitteltemperatur in diesem Fall dominiert. Sinkt der Gasstrom jedoch ab, so dass die Anlage im Teillastbereich arbeitet, so wird der Einfluss des Kältemittels über den Wärmeleiter auf den Sensor immer größer, bis im Nulllastbereich nur noch die Temperatur des Kältemittels gemessen wird. Da das Kältemittel eine konstante Temperatur z. B. +1,7 °C bei einer typischen Eintrittstemperatur der Druckluft von 35 °C aufweist, aber die Temperatur der gekühlten Druckluft +3 °C (Druck-Taupunkt nach ISO) nicht unterschreiten soll, kann aus der gemessenen Temperatur bzw. der Differenz der gemessenen Temperatur zur konstanten Kältemitteltemperatur auf den Kältebedarf und damit die erforderliche Leistung des Kühlkompressors geschlossen werden. Die Berechnung des Kältebedarfs aus der Temperaturdifferenz wird im Regelsystem vorgenommen.

Um die genannte Temperaturmessung zu realisieren, ist in dem genannten US-Patent als Wärmetauscher ein Rohrbündelwärmetauscher entsprechend Figur 7 dieser Druckschrift vorgesehen. In einem äußeren Rohr verdampft das Kältemittel und sorgt damit für die Kühlwirkung. In dem äußeren Rohr sind innere Rohre in Bündelform angeordnet, durch welche die zu kühlende Druckluft strömt. Die Rohre dieses Rohrbündels sind aus dem Kältemittelraum heraus geführt und enden in einer weiteren Kammer des Wärmetauschers. Das Ende eines der Rohre ist verlängert. An der Außenseite der Verlängerung ist der Temperatursensor in einem den Sensor umhüllenden Gehäuserohr angebracht. Der Temperatursensor erfasst die Temperatur des thermisch leitfähigen Rohres, welches sowohl mit dem im Inneren strömenden zu kühlenden Gas als auch mit dem an der Außenseite angeordneten Kältemittel in thermischem Kontakt steht. In diesem Fall bildet also das eine Rohr des Rohrbündels den Wärmeleiter, der den Temperatursensor mit dem Kältemittel thermisch verbindet. Es wird also immer eine Mischtemperatur zwischen der Kältemitteltemperatur und der Temperatur der austretenden Druckluft erfasst. Da der Temperatursensor außerhalb des Kältemittelbereichs angeordnet ist, dominiert bei Volllast die Drucklufttemperatur, bei niedriger Last oder Nulllast aber die Kältemitteltemperatur.

Es bestand nun die Forderung, das genannte Messprinzip auch mit anderen Arten von Wärmetauschern technisch umzusetzen.

Besonders vorteilhaft in diesem Zusammenhang ist ein Plattenwärmetauscher der an sich bekannten Art. Er ist sehr kostengünstig zu fertigen. Die Austauschfläche und das Innenvolumen lassen sich problemlos in weitem Umfang variieren. Ein hoher Automatisierungsgrad bei der Fertigung ist möglich .

Der Erfindung liegt daher die Aufgabe zugrunde, bei einem Kältetrockner der eingangs genannten Art die Einschränkung auf einen Rohrbündelwärmetauscher aufzuheben und das o. g. Messprinzip bei einem beliebigen, insbesondere bei einem Plattenwärmetauscher zu verwirklichen, ohne dass die wesentlichen Vorteile des Plattenwärmetauschers dadurch beeinträchtigt werden.

Insbesondere soll das genannte Messprinzip für beliebige Wärmetauscher einsetzbar sein, bei denen nicht wie im Falle des Rohrbündelwärmetauschers der Austrittssstutzen für das gekühlte Gas unmittelbar in Verbindung mit dem Kältemittel steht, so dass der Austrittsstutzen nicht gleichzeitig den ersten Wärmeleiter zwischen dem Kältemittel und dem Temperatursensor bilden kann. Auch ein Wärmetauscher mit Hohlkammerprofilen, wie er in der DE 102 61 922 A1 beschrieben wird, soll Verwendung finden können.

Diese Aufgabe wird bei dem Kältetrockner der eingangs genannten Art erfindungsgemäß dadurch gelöst, dass der erste Wärmeleiter außerhalb des Wärmetauschers angeordnet ist, wobei insbesondere der Wärmetauscher ein Plattenwärmetauscher ist.

Im Gegensatz zum Stand der Technik nach dem US-Patent, wo sowohl der Temperatursensor als auch das den Wärmeleiter bildende Rohr des Rohrbündelwärmetauschers innerhalb des äußeren Gehäuserohrs angeordnet ist, befindet sich also der erste Wärmeleiter bei der Neuentwicklung zumindest teilweise außerhalb des Wärmetauschers. Auch der Temperatursensor befindet sich vorzugsweise außerhalb des Wärmetauschers, er kann aber in bestimmten Fällen auch innerhalb der Austrittsöffnung für die Druckluft, also gewissermaßen innerhalb des Wärmetauschers angeordnet sein. Wichtig ist jedoch, dass der erste Wärmeleiter außerhalb des Wärmetauschers angeordnet ist, um weder die Funktion des Wärmetauschers zu beeinträchtigen noch aufwändige Umbaumaßnahmen am Wärmetauscher bzw. entsprechende Eingriffe innerhalb des Wärmetauschers notwendig zu machen.

Da der erste Wärmeleiter erfindungsgemäß außerhalb des Wärmetauschers angeordnet ist, ist es von Vorteil, wenn der Wärmeleiter von einer Wärmedämmschicht umgeben, also thermisch isoliert ist, damit einerseits ein ungestörter Wärmefluss im Wärmeleiter erfolgt und andererseits die Luftfeuchtigkeit nicht an der kalten Außenseite des Wärmeleiters kondensiert.

Zur Verbesserung des Wärmeübergangs von der Druckluft am Austritt des Wärmetauschers zum Temperatursensor wird vorgeschlagen, dass ein zweiter, thermisch mit dem Temperatursensor verbundener Wärmeleiter zumindest teilweise innerhalb der Gasaustrittsöffnung des Wärmetauschers angeordnet ist und insbesondere quer durch den Austrittsquerschnitt der Öffnung verläuft. Im Gegensatz zum Stand der Technik nach dem o. g. US-Patent, wo die austretende Druckluft durch ein Rohr strömt, welches bei Volllast die gleiche Temperatur wie die Druckluft hat und damit als Messpunkt für den Temperatursensor dienen kann, ist ein solches Rohr beim erfindungsgemäßen Wärmetauscher nicht vorhanden. Um dennoch eine zuverlässige Messung der Drucklufttemperatur bei Volllast zu ermöglichen, wird die genannte Anordnung eines zweiten Wärmeleiters innerhalb der Gasaustrittsöffnung vorgeschlagen.

Dabei kann dieser zweite Wärmeleiter mit Vorteil als ein von außen zugängliches Gehäuse für den Temperatursensor und insbesondere als ein einseitig offenes Röhrchen ausgebildet sein, also zwei Funktionen erfüllen. Das Gehäuse dient nicht nur zur Wärmeleitung, sondern auch zum Schutz und zur Führung der elektrischen Zuleitung des Temperatursensors.

Wenn wie in an sich bekannter Weise der Austritt für das Gas als ein nach außen ragender Austrittsstutzen ausgebildet ist, der insbesondere thermisch leitfähig ist, ist es günstig, wenn der Temperatursensor an der Außenseite des Austrittsstutzens angeordnet ist, da die Temperatur des Austrittsstutzens zumindest bei Volllast der Gastemperatur entspricht. Außerdem sind keine aufwändigen Eingriffe in den Wärmetauscher notwendig.

Weiterhin wird vorgeschlagen, dass der erste Wärmeleiter mit einem thermisch leitfähigen Eintrittsstutzen für das Kältemittel verbunden ist. Ein solcher Eintrittsstutzen hat nämlich die gleiche Temperatur wie das konstant auf eine bestimmte Temperatur, insbesondere 1,7 °C, gehaltene Kältemittel.

Ganz besonders bevorzugt ist es, wenn der Temperatursensor an der Innenseite des Bodens des einseitig offenen Röhrchens, nämlich des zweiten Wärmeleiters, angeordnet ist und die Außenseite des Bodens mit dem Austrittsstutzen für das Gas und mit dem ersten Wärmeleiter thermisch und insbesondere auch mechanisch verbunden ist, insbesondere durch eine Lötverbindung. Auf diese Weise erfasst der Temperatursensor auch unter wechselnden Lastbedingungen immer die zu messende Misch-Temperatur, aus der eine nachfolgende Regeleinheit die Stellgrößen für den Kältemittelkompressor berechnet.

Im Folgenden wird die Erfindung anhand von Zeichnungen näher erläutert. Es zeigen
- Figur 1: ein Blockdiagramm der Anordnung zur Realisierung des Messprinzips (Stand der Technik),
- Figur 2: eine Aufsicht auf einen Plattenwärmetauscher mit der erfindungsgemäßen Anordnung zur Temperaturmessung und
- Figur 3: eine perspektivische Darstellung des Gasaustrittsbereiches bei dem Wärmetauscher nach Figur 2 entsprechend der Erfindung.

In allen Zeichnungen haben gleiche Bezugszeichen die gleiche Bedeutung und werden daher gegebenenfalls nur einmal erläutert.

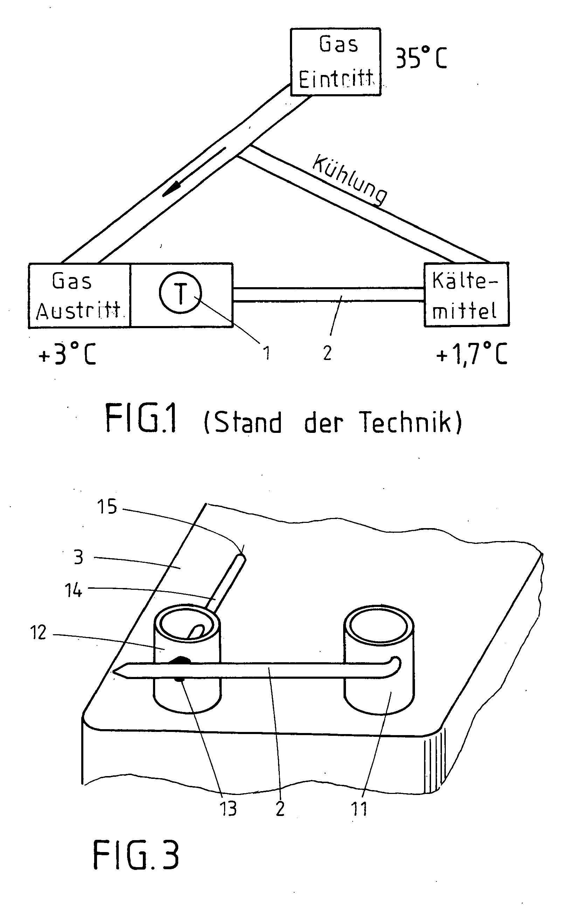

Figur 1 zeigt das grundlegende Messprinzip, wie es auch bereits in der US 6,711,906 B2 offenbart ist. Das am Eintritt mit 35 °C in die Anlage eintretende Gas, insbesondere Druckluft, wird vorgekühlt, anschließend in einem mit einem Kältemittel betriebenen Wärmetauscher auf 3 °C gekühlt und tritt mit dieser Temperatur aus dem Wärmetauscher aus. Dort am Austritt ist ein Temperatursensor 1 angeordnet. Der Temperatursensor 1 steht außerdem über einen ersten Wärmeleiter 2 thermisch mit dem Kältemittel in Verbindung, welches konstant auf +1,7 °C gehalten wird.

Die zu trocknende Druckluft hat üblicherweise einen Druck von 7 bar. Sie wird nicht nur getrocknet, sondern auch filtriert. Die derart gereinigte und getrocknete Druckluft wird für eine Vielzahl von Anwendungsfällen, z. B. für Lackierkabinen, zur Herstellung von CD-Roms, zur Reifenbefüllung, zum Betrieb von Druckluftwerkzeugen, usw. verwendet. Dabei werden einmal größere und dann wieder geringere Druckluftmengen angefordert, so dass der Drucklufttrockner teilweise mit Volllast, teilweise mit Teillast und teilweise mit Nulllast arbeitet. Eine Messung der Temperatur der austretenden Druckluft bei Teillast und Nulllast ist wegen der dann auftretenden Isolierwirkung der stagnierenden Druckluft sehr schwierig oder sogar unmöglich. Es würden dann regelmäßig zu hohe Temperaturen angezeigt. Die hohen Temperaturen würden das Regelsystem veranlassen, stärker zu kühlen, obwohl bei der Teillast oder Nulllast eine geringere Kühlung erforderlich ist.

Das in Figur 1 dargestellte Prinzip löst dieses Problem und ermöglicht eine exakte Erfassung des Kühlbedarfs und damit eine Energieeinsparung bei Teillast und Nulllast gegenüber dem Energieverbrauch bei einer dauernden Volllast. Wenn der Temperatursensor eine relativ niedrige Temperatur anzeigt, so ist dies ein Hinweis auf Teillast oder Nulllast, so dass die Kälteleistung zurückgefahren werden kann. Die Differenz zwischen der gemessenen Temperatur und der konstanten Kältemitteltemperatur von 1,7 °C ist demnach ein Maß für den Druckluftverbrauch und den Kühlbedarf, der wiederum zur Regelung des Kompressors dient.

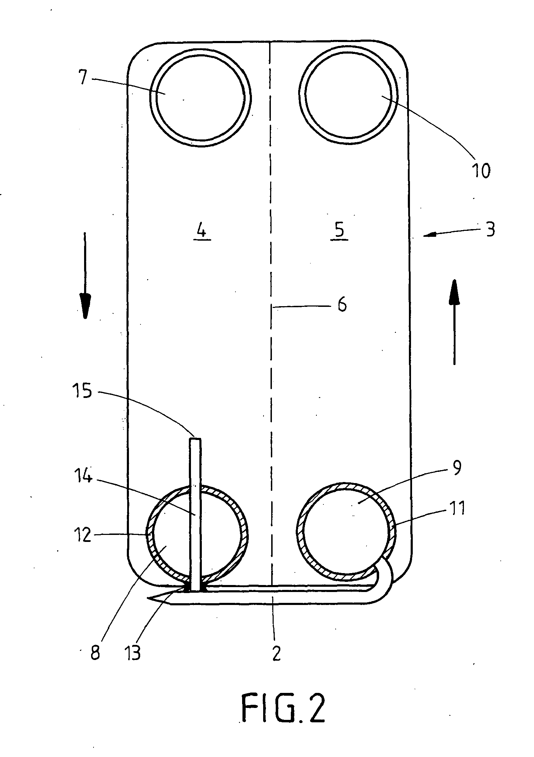

Die Figuren 2 und 3 zeigen ein erfindungsgemäßes Ausführungsbeispiel. Ein Plattenwärmetauscher 3 ist in an sich bekannter Weise in zwei Räume 4, 5 unterteilt, durch die das zu kühlende Fluid, hier vorzugsweise Druckluft, und das Kältemittel strömen. Der Wärmeübergang findet an der gestrichelt eingezeichneten Grenzfläche, der Zwischenwand 6 statt. Am Eintritt 7 strömt das zu kühlende Gas in den Wärmetauscher 3 ein, den es am Austritt 8 mit einer Temperatur von +3 °C verlässt. Im Gegenstrom wird das Kältemittel am Eintritt 9 in den Wärmetauscher eingeleitet, den es am Austritt 10 wieder verlässt. Das Gegenstromverfahren ist durch Pfeile in Figur 2 angedeutet.

Erfindungsgemäß ist ein erster Wärmeleiter 2, nämlich ein außen thermisch isoliertes Kupferrohr 2 vom thermisch leitfähigen Eintrittsstutzen 11 für das Kältemittel zum Austrittsstutzen 12 für das Gas geführt und dort mit einer Lötverbindung 13 thermisch und mechanisch mit der Außenseite des Austrittsstutzens 12 für das Gas verbunden. Dabei liegt das Kupferrohr 2, welches auch ein Kupferstab oder ein dicker Kupferdraht sein kann, - anders als in Figur 2 dargestellt - unmittelbar an der Außenseite des Austrittsstutzens 12 an.

Mit der gleichen Lötverbindung ist das Ende eines Kupferrohrs 14 mit der Außenseite des Austrittsstutzens 12 und mit dem ersten Wärmeleiter 2 verbunden. Dieses Kupferrohr 14 bildet den zweiten Wärmeleiter, welcher sich quer durch den Austrittsquerschnitt des Gasaustrittes erstreckt und sich dabei nach außen hin fortsetzt bis zum offenen anderen Ende 15. Im Kupferrohr 14 ist ein nicht dargestellter Temperatursensor 1 im Bereich der Lötverbindung 13 angebracht. Die nicht dargestellten elektrischen Zuleitungen des Temperatursensors 1 sind durch das Kupferrohr 14 und von dort nach außen zur ebenfalls nicht dargestellten Regeleinrichtung geführt.

Die Vorrichtung arbeitet folgendermaßen. Bei Volllast, wenn die maximale Druckluftmenge durch den Plattenwärmetauscher strömt, bringt der Druckluftstrom das Kupferrohr 14 auf die gleiche Temperatur wie die Druckluft am Austritt 8. Dabei wird dem Kupferrohr 14 ein so große Wärmemenge zugeführt, dass der Wärmeabfluss über den ersten Wärmeleiter 2 zum Eintrittsstutzen 11 und zum Kältemittel dagegen vernachlässigbar ist. Der Temperatursensor 1 misst bei Volllast daher exakt die Temperatur der Druckluft am Austritt 8.

Bei einem geringeren Durchsatz an Druckluft, also bei Teillast, oder bei verschwindendem Druckluftdurchsatz, also bei Nulllast, wird dem Kupferrohr 14 eine erheblich geringere Wärmemenge und bei Nulllast sogar keine Wärmemenge mehr zugeführt. Der Wärmeabfluss über den ersten Wärmeleiter 2 gewinnt dadurch mehr und mehr an Einfluss, bis er bei Nulllast den einzigen thermischen Einfluss auf die Lötverbindung 13 und damit auf den Temperatursensor 1 ausübt. Bei Teillast hat die Lötverbindung 13 daher eine Temperatur zwischen der Drucklufttemperatur am Austritt 8 und der Kältemitteltemperatur von 1,7 °C, welche konstant gehalten wird. Bei Nulllast sinkt die Temperatur der Lötstelle 13 sogar auf die Kältemitteltemperatur von 1,7 °C.

Die an der Lötverbindung 13 gemessene Temperatur gibt damit einen Aufschluss über die Durchflussmenge an Druckluft, also die Belastung des Plattenwärmetauschers. Je nach Last fährt dann die Regeleinrichtung den Kältemittelkompressor mehr oder weniger zurück, so dass immer eine Kältemitteltemperatur von 1,7 °C aufrechterhalten wird, welche nicht unterschritten oder überschritten werden soll. Diese Leistungsregulierung des Kältemittelkompressors führt zu der gewünschten Energieeinsparung bei Teillastbetrieb des Kälte-Drucklufttrockners.

### Bezugszeichenliste

- 1: Temperatursensor
- 2: erster Wärmeleiter, Kupferrohr
- 3: Plattenwärmetauscher
- 4: Raum für Gas (Druckluft)
- 5: Raum für Kältemittel
- 6: Zwischenwand
- 7: Eintritt Gas
- 8: Austritt Gas
- 9: Eintritt Kältemittel
- 10: Austritt Kältemittel
- 11: Eintrittsstutzen für Kältemittel
- 12: Austrittsstutzen für Gas
- 13: Lötverbindung
- 14: Kupferrohr, zweiter Wärmeleiter, Gehäuse, Röhrchen
- 15: offenes Ende

## Patentansprüche

1. Kälte-Trockner für ein Gas, insbesondere für Druckluft, mit einem Wärmetauscher, der mit einem Kältemittel betreibbar ist und einen Austritt (8) für das Gas und einen Temperatursensor (1) zur Messung der Gastemperatur am Austritt aufweist, wobei ein erster Wärmeleiter (2) den Temperatursensor (1) mit dem Kältemittel verbindet,
**dadurch gekennzeichnet,**
**dass** der erste Wärmeleiter (2) außerhalb des Wärmetauschers (3) angeordnet ist und dass insbesondere der Wärmetauscher ein Plattenwärmetauscher (3) ist.

2. Kälte-Trockner nach Anspruch 1,
**dadurch gekennzeichnet,**
**dass** der erste Wärmeleiter (2) von einer Wärmedämmschicht umgeben ist.

3. Kälte-Trockner nach Anspruch 1,
**dadurch gekennzeichnet,**
**dass** der Austritt (8) für das Gas eine Öffnung aufweist und ein zweiter, thermisch mit dem Temperatursensor (1) verbundener Wärmeleiter (14) zumindest teilweise innerhalb der Öffnung angeordnet ist und insbesondere quer durch den Austrittsquerschnitt der Öffnung verläuft.

4. Kälte-Trockner nach Anspruch 3,
**dadurch gekennzeichnet,**
**dass** der zweite Wärmeleiter (14) als ein von außen zugängliches Gehäuse für den Temperatursensor (1) und insbesondere als ein einseitig offenes Röhrchen ausgebildet ist.

5. Kälte-Trockner nach Anspruch 1,
**dadurch gekennzeichnet,**
**dass** der Austritt (8) für das Gas als ein nach außen ragender, insbesondere thermisch leitfähiger, Austrittsstutzen (12) ausgebildet ist und dass der Temperatursensor (1) an der Außenseite des Austrittsstutzens (12) angeordnet ist.

6. Kälte-Trockner nach Anspruch 1,
**dadurch gekennzeichnet,**
**dass** der Wärmetauscher (3) einen thermisch leitfähigen Eintrittsstutzen (11) für das Kältemittel aufweist und dass der erste Wärmeleiter (2) mit dem Eintrittsstutzen (11) verbunden ist.

7. Kälte-Trockner nach den Ansprüchen 4 und 5,
**dadurch gekennzeichnet,**
**dass** der Temperatursensor (1) an der Innenseite des Bodens des einseitig offenen Röhrchens (14) angeordnet ist und die Außenseite des Bodens mit dem Austrittsstutzen (8) für das Gas und mit dem ersten Wärmeleiter (2) thermisch und insbesondere auch mechanisch verbunden ist, vorzugsweise über eine Lötverbindung (13).
